# EUROPEAN PATENT APPLICATION

(11) **EP 4 804 381 A1**
(43) Date of publication of application: **09.09.2026**
(21) Application number: 26700132.9
(22) Date of filing: 13.01.2026
(51) Int. Cl.: H02J 50/12, H02J 50/90, H02J 50/00, H02J 50/70

(54) **ELECTRONIC DEVICE FOR SUPPORTING WIRELESS CHARGING USING MAGNET AND DRIVING METHOD THEREOF**

(30) Priority: 14.01.2025 KR 20250005749; 22.01.2025 KR 20250009849; 26.02.2025 KR 20250025194
(71) Applicant: Samsung Electronics Co., Ltd., Suwon-si, Gyeonggi-do 16677 (KR)
(72) Inventor: SHIN, Seungshik, Suwon-si, Gyeonggi-do 16677 (KR); YOU, Jaehyoung, Suwon-si, Gyeonggi-do 16677 (KR); LIM, Jaedeok, Suwon-si, Gyeonggi-do 16677 (KR); PARK, Baewon, Suwon-si, Gyeonggi-do 16677 (KR); YE, Sangmin, Suwon-si, Gyeonggi-do 16677 (KR); CHO, Woosik, Suwon-si, Gyeonggi-do 16677 (KR); CHOI, Jinsik, Suwon-si, Gyeonggi-do 16677 (KR)
(74) Representative: Gulde & Partner
(86) International application number: PCT/KR2026/000762
(87) International publication number: WO 2026/155526

(57) **Abstract**

Embodiments of the disclosure relate to an electronic device for supporting wireless charging using a magnet and a method for operating the same. The electronic device may include a coil antenna 210 for wireless charging, a battery configured to be charged with power received through the coil antenna 210, and a first magnet assembly 310 or 1610 which is disposed adjacent to the coil antenna 210, is detachably attached to a second magnet assembly 320 of a power supply device for the wireless charging, and includes a first magnet 402, wherein the first magnet 402 includes an inner portion 410 having a first width, an outer portion 420 which is disposed farther from the coil antenna 210 than the inner portion 410 and has a second width smaller than the first width, and an air gap 430 disposed between the inner portion 410 and the outer portion 420 and disposed farther from the coil antenna 210 than the inner portion 410. Various other embodiments may be further included.

## Description

### [Technical Field]

Embodiments of the disclosure relate to an electronic device for supporting wireless charging using a magnet and a method for operating the same.

### [Background Art]

The Wireless Power Consortium (WPC) is an organization established to define and promote the Qi wireless charging standard. The WPC announced Qi2 as a wireless charging standard that uses a magnet to align a wireless power transmission device and a wireless power reception device, thereby increasing charging efficiency and speed.

According to the Qi2 standard, wireless charging supports high-speed wireless charging of up to approximately 15W, and the wireless power transmission device and the wireless power reception device may be aligned using a magnet.

With the announcement of the Qi2 standard, research and development have been actively underway on technologies that embed a magnet in an electronic device or embed a magnet in a cover device (e.g., a cover accessory) attachable to or detachable form the electronic device. The magnetic field (e.g., B-field) of the magnet included in the electronic device or the cover device may be potentially degrade the performance of at least some components of the electronic device. For example, the magnetic field of the magnet may cause magnetic field interference with a coil of the electronic device for wireless charging. For example, the magnetic field of the magnet may cause malfunction (e.g., an error in the auto-focus function) of a camera module of the electronic device.

The above information may be provided as related art to aid in understanding the disclosure. No claim or determination is made regarding whether any of the above descriptions may be applied as prior art in relation to the disclosure.

### [Disclosure of Invention]

### [Technical Problem]

The embodiments of the disclosure may provide an electronic device, a method of operating the same, and a recording medium, the electronic device being capable of reducing the degradation of performance of components of the electronic device caused by the magnetic field (e.g., B-field) of a magnet.

The technical problems to be solved by the disclosure are not limited to those mentioned above, and other technical problems not mentioned herein will be clearly understood by those skilled in the art to which the disclosure belong from the following description.

### [Solution to Problem]

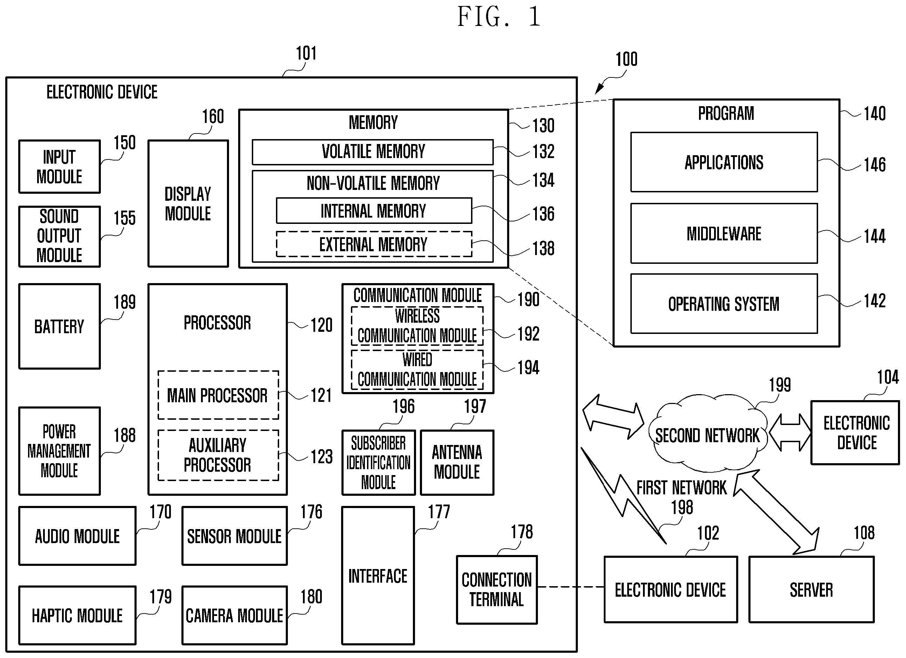

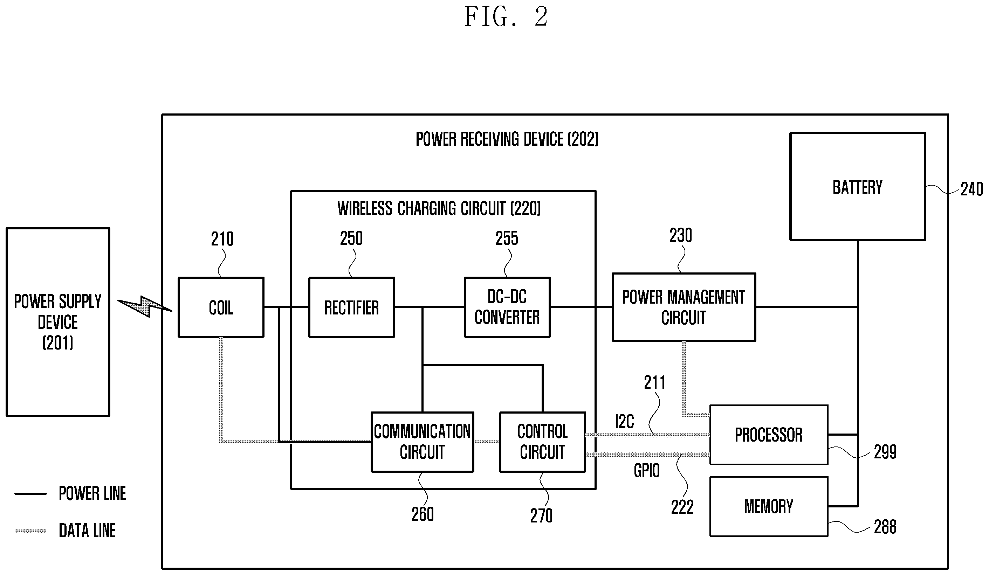

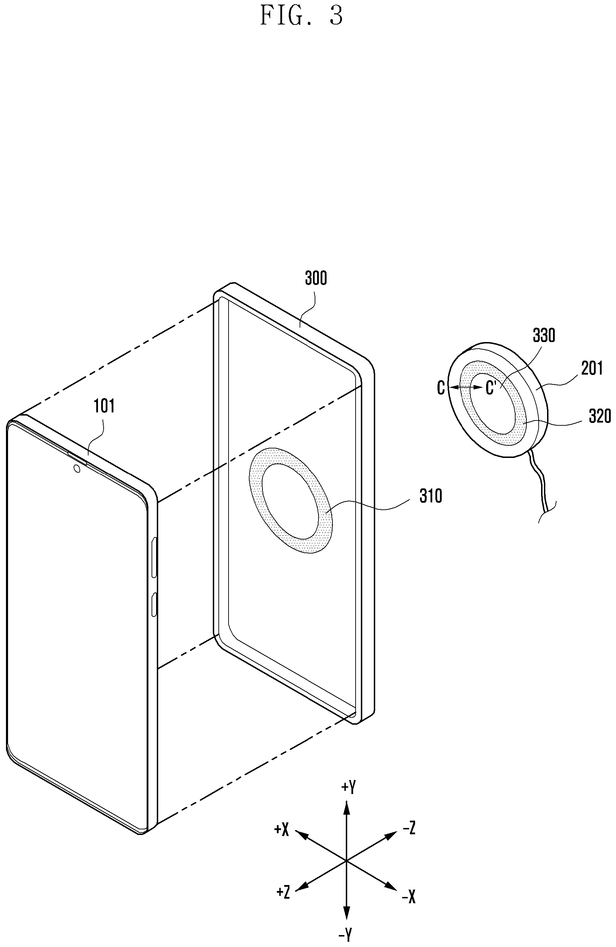

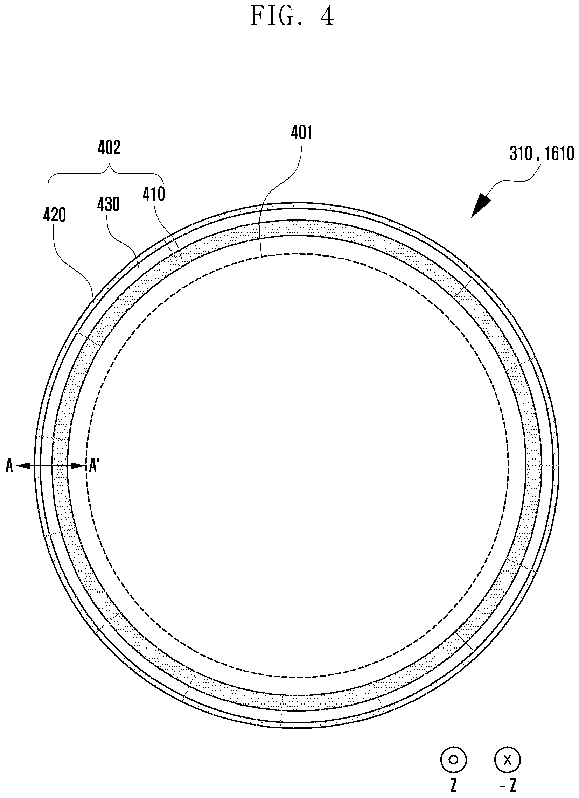

An electronic device (e.g., an electronic device 101 in FIG. 1) according to an embodiment of the disclosure may include a coil antenna (e.g., a coil antenna 210 in FIG. 2) for wireless charging, a battery configured to be charged with power received through the coil antenna 210, and a first magnet assembly (e.g., a first magnet assembly 310 or 160 in FIG. 4) which is disposed adjacent to the coil antenna 210, is detachably attached to a second magnet assembly (e.g., a second magnet assembly 320 in FIG. 3) of a power supply device for the wireless charging, and includes a first magnet (e.g., a first magnet 402 in FIG. 4), wherein the first magnet 402 includes an inner portion (e.g., an inner portion 410 in FIG. 4) having a first width, an outer portion (e.g., an outer portion 420 in FIG. 4) disposed farther from the coil antenna 210 than the inner portion 410 and having a second width smaller than the first width, and an air gap (e.g., an air gap 430 in FIG. 4) disposed between the inner portion 410 and the outer portion 420 and disposed farther from the coil antenna 210 than the inner portion 410.

An electronic device 101 according to an embodiment of the disclosure may include a coil antenna 210 for wireless charging, a battery configured to be charged with power received through the coil antenna 210, and a first magnet assembly 310 or 160 which is disposed adjacent to the coil antenna 210, is detachably attached to a second magnet assembly 320 of a power supply device for the wireless charging, and includes a first magnet 402, the first magnet 402 including an inner portion 410, an outer portion disposed farther from the coil antenna 210 than the inner portion 410, and an air gap 430 disposed between the inner portion 410 and the outer portion 420 and disposed farther from the coil antenna 210 than the inner portion 410, and a shield member 440 arranged to at least partially surround the first magnet 402, wherein the shield member 440 includes a bottom portion 440a disposed between the battery of the electronic device 101 and the first magnet 402, and a first side portion 440b extending from one side of the bottom portion 440a and covering a portion of a side surface of the inner portion 410, the first magnet assembly 310 or 1610 and the second magnet assembly 320 are concentric with respect to each other in case that the first magnet assembly 310 or 1610 is attached to the second magnet assembly 320, and a distance between the first side portion 440b of the shielding member 440 and the center of the first magnet assembly 310 or 1610 corresponds to a distance between the center of the second magnet assembly 320 and an inner portion 1010 of the second magnet assembly 320.

### [Advantageous Effects of invention]

The embodiments of the disclosure may reduce the degradation of performance of components of an electronic device caused by the magnetic field (e.g., B-field) of a magnet.

### [Brief Description of Drawings]

Other aspects, features, and advantages according to specific embodiments of the disclosure will be more apparent from the accompanying drawings and relevant descriptions.
FIG. 1 is a block diagram of an electronic device in a network environment according to an embodiment.
FIG. 2 illustrates a wireless charging system according to an embodiment.
FIG. 3 is a conceptual diagram illustrating an electronic device, a cover device (e.g., a cover accessory) attachable to and detachable from the electronic device, and a power supply device according to an embodiment.
FIG. 4 is a plan view illustrating a first magnet according to an embodiment.
FIG. 5 is a cross-sectional view showing a portion of the first magnet illustrated in FIG. 4.
FIG. 6 illustrates the result of an experiment on the magnetic field of the first magnet according to the embodiment of FIG. 5.
FIG. 7 illustrates a first magnet and a shielding member according to an embodiment.
FIG. 8 is a cross-sectional view of a portion of the magnet and the shielding member illustrated in FIG. 7.
FIG. 9 illustrates the result of an experiment on the magnetic field of the first magnet according to the embodiment of FIG. 8.
FIGS. 10A and 10B illustrate a state in which a first magnet and a second magnet of a power supply device, according to an embodiment, are aligned with each other.
FIG. 11 illustrates the result of an experiment on the AC resistance of a coil while a first magnet and a second magnet of a power supply device, according to an embodiment, are aligned with each other.
FIG. 12 illustrates the result of an experiment on the magnetic field of the first magnet according to the embodiments of FIGS. 10A and 10B.
FIG. 13 illustrates a first magnet and a shielding member according to an embodiment.
FIG. 14 illustrates a first magnet and a shielding member according to an embodiment.
FIG. 15 is a conceptional diagram illustrating an area-specific cross-sectional structure of a first magnet according to an embodiment.
FIG. 16 illustrates the arrangement of a magnet in an electronic device according to an embodiment.
FIG. 17 illustrates a state in which a power supply device is attached to an electronic device according to an embodiment.
FIG. 18 is a flowchart illustrating the operation of a wireless charging system according to an embodiment.

### [Mode for the Invention]

Each of the embodiments described with reference to the drawings of the disclosure may be configured independently as a single embodiment. For example, the embodiment of FIG. 1 and the embodiment of FIG. 2 may be configured independently of each other. Each of the embodiments described with reference to the drawings of the disclosure may operate independently as a single embodiment. For example, the embodiment of FIG. 1 and the embodiment of FIG. 2 may operate independently of each other.

At least two of the embodiments described with reference to the drawings of the disclosure may be combined to form a configuration. For example, at least a portion of the embodiment of FIG. 1 and at least a portion of the embodiment of FIG. 2 may be combined to form a configuration. At least two of the embodiments described with reference to the drawings of the disclosure may be combined to operate. For example, at least a portion of the embodiment of FIG. 1 and at least a portion of the embodiment of FIG. 2 may be combined with each other and operate.

When at least two of the embodiments described with reference to the drawings of the disclosure are combined, at least some components and/or at least some operations included in each embodiment may be omitted. For example, when the embodiment of FIG. 1 and the embodiment of FIG. 2 are combined, at least some components and/or at least some operations included in the embodiment of FIG. 1 may be omitted, and at least some components and/or at least some operations included in the embodiment of FIG. 2 may be omitted.

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

FIG. 2 illustrates a wireless charging system according to an embodiment.

Referring to FIG. 2, the wireless charging system according to an embodiment may include a power supply device 201 (e.g., the electronic device 102 in FIG. 1) and a power receiving device 202 (e.g., the electronic device 101 in FIG. 1).

The power supply device 201 (e.g., the electronic device 102 in FIG. 1) may wirelessly transmit power. The power receiving device 202 (e.g., the electronic device 101 in FIG. 1) may wirelessly receive power. The wireless charging system may perform wireless charging based on a designated charging protocol. The designated charging protocol may include baseline power profile (BPP), extended power profile (EPP), and magnetic power profile (MPP) according to the Qi standard (e.g., Qi 2.0 standard, Qi 2.1 standard).

According to an embodiment, the wireless charging system may support BPP, and thus may support general wireless charging (also referred to as low-speed wireless charging) at a maximum of approximately 5W. BPP may be low-speed wireless charging based on unidirectional communication where data is transmitted only from the power receiving device 202 to the power supply device 201. During wireless charging according to BPP, the power supply device 201 may wirelessly transmit a maximum of approximately 5W of power to the power receiving device 202.

The wireless charging system according to an embodiment may support EPP, and thus support high-speed wireless charging at a maximum of approximately 15W. EPP may be high-speed wireless charging based on bidirectional communication between the power supply device 201 and the power receiving device 202. During wireless charging according to EPP, the power supply device 201 may wirelessly transmit a maximum of approximately 15W of power to the power receiving device 202.

The wireless charging system according to an embodiment supports designated wireless charging, such as MPP, and thus may support high-speed wireless charging of approximately 15W or more based on the alignment state of the power supply device 201 and the power receiving device 202 using a magnet. When the wireless charging system operates in MPP charging mode, higher power may be wirelessly transmitted than when operating in EPP charging mode. During wireless charging according to MPP, after the power supply device 201 and the power receiving device 202 identify a mutual alignment state using a magnet, the power supply device 201 may wirelessly transmit approximately 15W or more of power to the power receiving device 202.

According to an embodiment, the power receiving device 202 may include a coil antenna (or conductive pattern or coil) 210, a wireless charging circuit 220, a power management circuit 230, a battery 240 (e.g., the battery 189 in FIG. 1), a memory 288 (e.g., the memory 130 in FIG. 1), and a processor 299 (e.g., the processor 120 in FIG. 1). According to an embodiment, the power supply device 201 may include components that are the same as or substantially the same as at least some components of the power receiving device 202. For example, the power supply device 201 may include a coil at least partially similar to the coil antenna 210 described with reference to FIG. 2, and may include a transmission IC configured to wirelessly transmit power through the coil, and a controller for controlling the overall operation of the power supply device 201.

According to an embodiment, the wireless charging circuit 220 (e.g., the circuit configured in the power management module 188 of FIG. 1) may be activated by a power signal (e.g., a digital ping) received from the power supply device 201 through the coil antenna 210. The wireless charging circuit 220 may be configured to perform a given function (e.g., charging the battery 240 and communicating with the power supply device 201 for this purpose) using the power supplied from the power supply device 201. According to an embodiment, the wireless charging circuit 220 may include a rectifier 250, a DC-DC converter 255, a communication circuit 260, and a control circuit 270. According to an embodiment, the rectifier 250, the DC-DC converter 255, the communication circuit 260, and the control circuit 270 may be configured as a single integrated circuit (IC). For example, a single IC may be configured to perform operations for rectification, DC-DC conversion, communication, and control of the wireless charging circuit 220.

According to an embodiment, the control circuit 270 may be configured in a separate IC with at least one among the communication circuit 260, the rectifier 250, and the DC-DC converter 255.

According to an embodiment, at least one among the rectifier 250, the DC-DC converter 255, the communication circuit 260, and the control circuit 270 may be configured in a single IC together with the power management circuit 230.

According to an embodiment, the power management circuit 230 may include a converter for supplying power to the battery 240 and a load (e.g., the processor 299). For example, a buck-boost charger and/or a direct charger may be included. The direct charger may be a switched capacitor voltage divider (SCVD) converter and may change an input voltage and an output voltage by a ratio of n:1. The power management circuit 230 may include a power management integrated circuit (PMIC) for supplying appropriate voltage and current to various loads (e.g., a processor, a display, or a sensor).

The memory 288 (e.g., the memory 130 in FIG. 1) and the processor 299 (e.g., the processor 120 in FIG. 1) may be load circuits (i.e., systems) that operate using power supplied from the wireless charging circuit 220 via the power management circuit 230 and/or power supplied from the battery 240. Additionally, the load circuits may include a display (e.g., the display module 160 in FIG. 1) and/or a communication circuit (e.g., the communication module 190 in FIG. 1).

The coil antenna 210 (e.g., a reception coil) may be a spiral-type coil wound multiple times in a clockwise or counterclockwise direction. When the power receiving device 202 is placed on the charging pad of the power supply device 201, the coil antenna 210 may be aligned parallel to the coil of the power supply device 201. The power receiving device 202 may receive power from the power supply device 201 through electrical coupling between a transmission coil (e.g., the coil of the power supply device 201) and a reception coil (e.g., the coil antenna 210). The coil antenna 210 may resonate at a frequency identical to the resonant frequency of the coil of the power supply device 201. The power receiving device 202 may further include a resonant circuit to cause the coil antenna 210 to resonate at a specific frequency (e.g., a frequency specified in the Wireless Power Consortium (WPC) standard). The coil antenna 210 may be used as an antenna for data communication (e.g., in-band communication) in addition to power reception. According to an embodiment, the power receiving device 202 may include multiple coil antennas 210.

The rectifier 250 may be configured to rectify the power received from the power supply device 201 through the coil antenna 210 (i.e., convert a current from alternating current (AC) to direct current (DC)) and output the rectified power to the DC-DC converter 255. The DC-DC converter (e.g., low dropout (LDO)) 255 may convert the voltage value (i.e., voltage level) of the power received from the rectifier 250 into a designated voltage value and output the designated voltage value to the power management circuit 230.

The power management circuit 230 (e.g., the circuit configured in the power management module 188 in FIG. 1) may adjust the voltage value and/or current value (i.e., the current level) of power supplied from the wireless charging circuit 220 and supply the power to the battery 240 and the load circuit. For example, the power management circuit 230 may include a buck converter that steps down the voltage of power received from the wireless charging circuit 220 and outputs the power, and/or a boost converter that steps up the voltage of the received power and outputs the power.

The communication circuit 260 may be configured to perform data communication (e.g., in-band communication) with the power supply device 201 through the coil antenna 210 by using power supplied from the power supply device 201 through the rectifier 250. For example, the communication circuit 260 may receive data from the control circuit 270 and transmit the received data to the power supply device 201 by embedding the received data in a power signal received from the power supply device 201. A technique of modulating the amplitude and/or frequency of the power signal may be used as a method of embedding the data in the power signal. For example, the communication circuit 260 may change the amplitude of the power signal by controlling the switching to open and close a switch located on an electrical path connecting the coil antenna 210 to the ground of the power receiving device 202. The communication circuit 260 may demodulate a power signal transmitted from the power supply device 201 to the coil antenna 210 to obtain data transmitted by the power supply device 201 to the power receiving device 202. The communication circuit 260 may transmit the obtained data to the control circuit 270.

The control circuit 270 may be activated by a power signal (e.g., a digital ping) supplied from the power supply device 201 through the rectifier 250. The control circuit 270 may be configured to perform data communication with the processor 299 via a communication interface provided in the power receiving device 202 by using the power supplied from the power supply device 201 through the rectifier 250, and to communicate with the power supply device via the communication circuit 260 in order to charge the battery 240. For example, the control circuit 270 may obtain charging state information from the power supply device 201 via the communication circuit 260 and provide the obtained information to the processor 299 via a first communication interface 211 (e.g., an inter-integrated circuit (I2C)).

According to an embodiment, based on a signal received from the processor 299 (e.g., a microcontroller unit MCU) or an application processor (AP)) via a second communication interface 222 (e.g., a general-purpose input/output (GPIO)), the control circuit 270 may set the charging mode of the wireless charging circuit 220 to an MPP mode or an EPP mode for fast charging of the battery 240. The control circuit 270 may set the charging mode of the wireless charging circuit 220 to a BPP mode, based on a signal received from the processor 299. The BPP mode may be a mode in which the battery 240 is charged at a relatively slower speed compared to the MPP mode or the EPP mode.

FIG. 3 is a conceptual diagram illustrating an electronic device 101, a cover device 300 (e.g., a cover accessory) attachable to or detachable from the electronic device 101, and a power supply device 201 according to an embodiment.

Referring to FIG. 3, the electronic device 101 according to an embodiment may be configured to use a magnet to align a coil antenna 210 (e.g., the coil antenna 210 in FIG. 2) of the electronic device 101 with a Tx coil 330 of the power supply device 201. For example, the power supply device 201 may include the Tx coil 330 and a second magnet assembly 320 surrounding the outer periphery of the Tx coil 330. The cover device 300 attachable to or detachable from the electronic device 101 may include a first magnetic assembly 310 corresponding to the second magnetic assembly 320. The electronic device 101 may align the Tx coil 330 of the power supply device 201 with the coil antenna 210 by using a magnetic force between the second magnetic assembly 320 and the first magnetic assembly 310.

According to an embodiment, the electronic device 101 may be configured to support a designated wireless charging protocol, such as the Qi 2.0 standard or the Qi 2.1 standard.

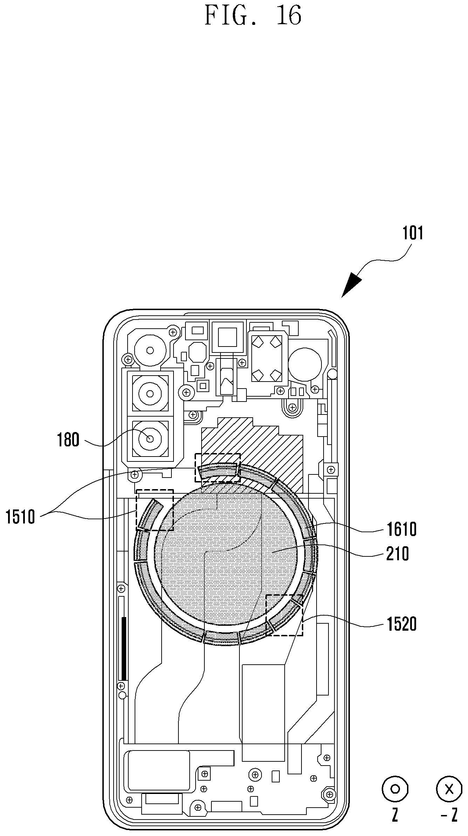

According to an embodiment, the electronic device 101 may support the Qi 2.0 standard, and thus may include a first magnetic assembly 1610 (e.g., the first magnetic assembly 310) as illustrated in FIG. 16, and support wireless charging by using the magnetic force between the second magnetic assembly 320 and the first magnetic assembly 1610.

According to an embodiment, the electronic device 101 may support the Qi 2.1 standard, and thus may support wireless charging using the magnetic force between the second magnetic assembly 320 and the first magnetic assembly 310 while the cover device 300 (e.g., the cover accessory) including the first magnetic assembly 310 is attached. The electronic device 101 may support a magnetic cover function according to magnetic cover power enhancement (MCPE) or a magnetic cover power magnet (MCPM). For example, the electronic device 101 may support the Qi 2.1 standard, and thus may perform wireless charging in MPP mode through the cover device 300 including the first magnetic assembly 310 without embedding the first magnetic assembly (e.g., the first magnetic assembly 1610 in FIG. 16). The electronic device 101 does not include the embedded first magnetic assembly, but may perform wireless charging in the MPP mode by attaching the cover device 300 that includes the first magnetic assembly 310. In this case, the first magnetic assembly 310 included in the cover device 300 may be coupled to the second magnetic assembly 320 of the power supply device 201, and serve as an auxiliary unit that causes the Tx coil 330 of the power supply device 201 to be aligned with the coil antenna 210 of the electronic device 101.

In the example illustrated in FIG. 3, the first magnet assembly 310 is shown as being embedded in the cover device 300. However, as illustrated in FIG. 16, the first magnet assembly 1610 may be embedded in the electronic device 101. As illustrated in FIG. 16, when the first magnetic assembly 1610 is embedded in the electronic device 101, the cover device 300 including the first magnetic assembly 310 may not be an essential component in wireless charging in the MPP mode.

Hereinafter, with reference to FIGS. 4, 5, 7, 8, 10A, 10B, 13, 14, and 15, a first magnetic assembly 310 or 1610 according to various embodiments will be described in detail. The first magnet assembly 310 described with reference to FIGS. 4, 5, 7, 8, 10A, 10B, 13, 14, and 15 may be the first magnet assembly 310 included in the cover device 300 as illustrated in FIG. 3. The first magnetic assembly 1610 described with reference to FIGS. 4, 5, 7, 8, 10A, 10B, 13, 14, and 15 may be the first magnetic assembly 1610 included in the electronic device 101 as illustrated in FIG. 16.

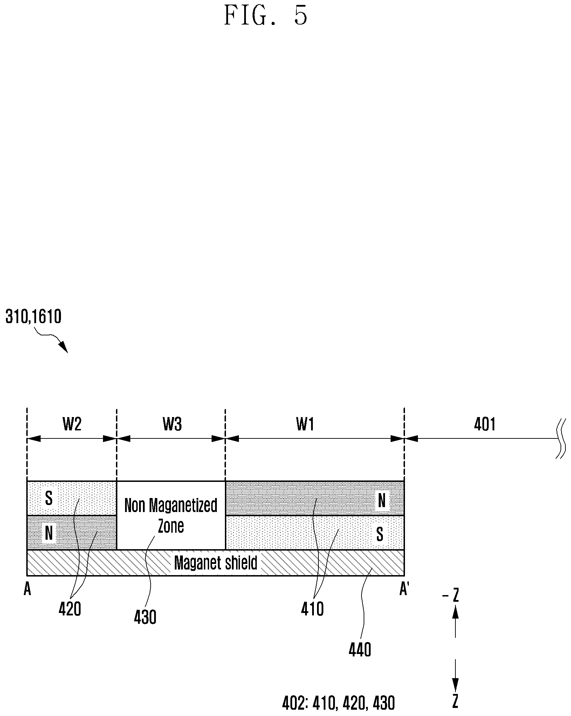

FIG. 4 is a plan view of a first magnetic assembly 310 or 1610 according to an embodiment. FIG. 5 is a cross-sectional view of a portion of the first magnetic assembly 310 or 1610 illustrated in FIG. 4. For example, FIG. 4 may be a drawing showing the first magnetic assembly 310 embedded in a cover device 300 according to an embodiment, or the first magnetic assembly 1610 embedded in the electronic device 101 according to an embodiment. For example, FIG. 5 may a cross-sectional view of a portion of the first magnetic assembly 310 or 1610 taken along line A-A' illustrated in FIG. 4.

Referring to FIGS. 4 and 5, the first magnetic assembly 310 or 1610 according to an embodiment may include a coil area 401 corresponding to a coil antenna 210 (e.g., the coil antenna 210 in FIG. 2), and a magnet area disposed outside the coil area 401.

According to an embodiment, the coil area 401 may be an area where the coil antenna 210 of the electronic device 101 is directly disposed, or an area overlapping at least a portion of the coil antenna 210. For example, the first magnet assembly 1610 may be embedded in the electronic device 101, in which case the coil area 401 may refer to the area where the coil antenna 210 is directly disposed. For example, the first magnet assembly 310 may be embedded in the cover device 300, in which case the coil area 401 may be an area overlapping at least a portion of the coil antenna 210 of the electronic device 101. The coil area 401 may be an area in which no magnet is disposed or non-magnetized area.

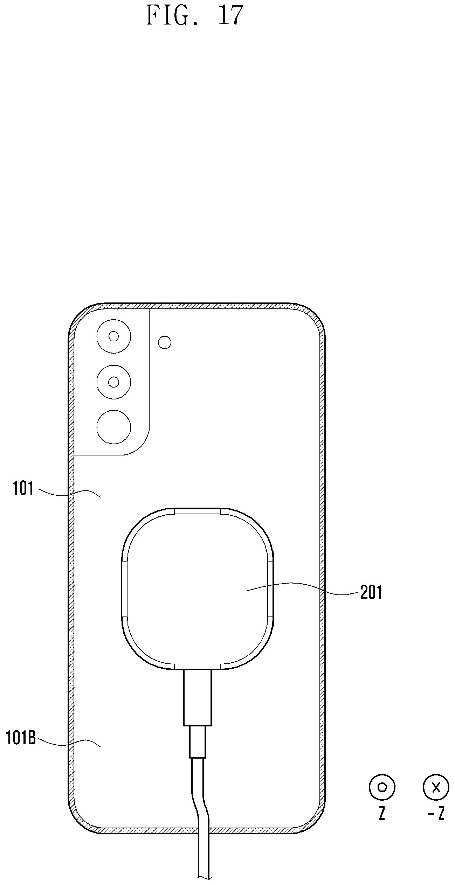

According to an embodiment, the first magnet assembly 310 or 1610 may include at least one first magnet 402. The at least one first magnet 402 may be coupled in a circular shape when the electronic device 101 is viewed from the rear surface (e.g., the rear surface 101B in FIG. 17) thereof. Therefore, the first magnet assembly 310 or 1610 formed by coupling the at least one first magnet 402 may be arranged in a circular shape. The first magnet 402 may include an inner portion 410, an air gap 430, and an outer portion 420.

According to an embodiment, the inner portion 410 is arranged to surround the coil area 401 and may be an area that generates a magnetic flux in a first direction (e.g., the -Z direction). For example, the N pole may be arranged on the upper side (in the -Z direction) and the S pole may be arranged on the lower side (in the Z direction). The inner portion 410 may have a first width W1. For example, the inner portion 410 may be an area adjacent to the coil area 401 and have the first width W1. As described later, the inner portion 410 may be configured to be coupled to an inner portion 1010 of the second magnet assembly 320 of the power supply device 201.

According to an embodiment, the outer portion 420 is arranged to surround the outer periphery of the inner portion 410 and may be an area that generates a magnetic flux in a second direction (e.g., the Z direction) opposite to the first direction. For example, the N pole may be arranged on the lower side (in the Z direction) and the S pole may be arranged on the upper side (in the -Z direction). The outer portion 420 may have a second width W2 smaller than the first width W1. As described later, the outer portion 420 may be configured to be coupled to an outer portion 1020 of the second magnet assembly 320 of the power supply device 201. According to an embodiment, the outer portion 420 may be an area located farther away from the coil antenna 210 than the inner portion 410. For example, the distance from the coil antenna 210 to the inner portion 410 may be shorter than the distance from the coil antenna 210 to the outer portion 420.

According to an embodiment, the air gap 430 is disposed between the inner portion 410 and the outer portion 420 and may be disposed farther away from the coil antenna 210 than the inner portion 410.

According to an embodiment, the first magnet 402 may be configured such that the width (i.e., the first width W1) of the inner portion 410 is greater than the width (i.e., the second width W2) of the outer portion 420, thereby reducing the effect of a magnetic field (e.g., B-field) generated by the first magnet assembly 310 or 1610 on at least some components of the electronic device 101.

For example, the magnetic field of the first magnet assembly 310 or 1610 may cause magnetic field interference with the coil antenna 210 of the electronic device 101. When magnetic flux is induced in the coil antenna 210, a shielding portion arranged on one surface of the coil antenna 210 may become saturated due to the magnetic flux. When the shielding portion becomes saturated and thus the magnetic field shielding function thereof decreases, eddy currents may occur in electrical components or metal ports of the electronic device 101 arranged around the coil antenna 210, thereby reducing the efficiency of the coil antenna 210. The disclosure may reduce magnetic field interference with the coil antenna 210 by making the width (i.e., the first width W1) of the inner portion 410 different from the width (i.e., the second width W2) of the outer portion 420.

According to an embodiment, the first magnet 402 is configured such that the width (i.e., the first width W1) of the inner portion 410 is greater than the width (i.e., the second width W2) of the outer portion 420, thereby allowing the magnetic flux density around the inner portion 410 to be greater than the magnetic flux density around the outer portion 420. When the magnetic flux density around the inner portion 410 increases, a magnetic field generated around the inner portion 410 may remain within a designated distance from the inner portion 410, thereby reducing the magnetic field generated around the inner portion and directed toward the coil antenna 210.

For example, the magnetic field of the first magnet assembly 310 or 1610 may cause malfunction (e.g., automatic focus function error) of the camera module 180 of the electronic device 101. For example, when magnetic flux is induced in the camera module 180, an error may occur in the automatic focus function of the camera module 180. The disclosure may reduce magnetic field interference with the camera module 180 by making the width (i.e., the first width W1) of the inner portion 410 different from the width (i.e., the second width W2) of the outer portion 420.

According to an embodiment, at least a portion of the first magnet assembly 310 or 1610 may be shielded by a shielding member 440. For example, the shielding member 440 may be disposed beneath (e.g., in the Z direction) of the first magnet assembly 310 or 1610. The shielding member 440 may shield the magnetic field generated by the first magnetic assembly 310 or 1610. According to the illustrated example, the first magnet assembly 310 or 1610, including the inner portion 410, the air gap 430, and the outer portion 420, may be disposed on (e.g., in the -Z direction) of the shielding member 440. In an embodiment, the material of the shielding member 440 may include steel plate cold commercial (SPCC), but the disclosure is not limited thereto.

In an embodiment, in the first magnet 402, the non-magnetized air gap 430 (non-magnetized zone) may be disposed between the inner portion 410 and the outer portion 420. For example, the width of the air gap 430 may be different from the first width W1, which is the width of the inner portion 410, or the second width W2, which is the width of the outer portion 420.

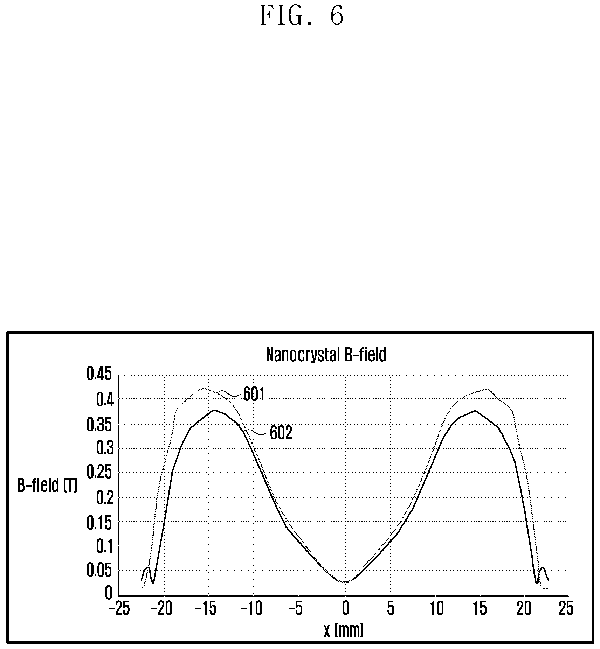

FIG. 6 illustrates the result of an experiment on the magnetic field of the first magnetic assembly 310 or 1610 according to the embodiment of FIG. 5. For example, FIG. 6 may illustrate the results of measuring the magnetic field of the first magnetic assembly 310 or 1610 according to the embodiment of FIG. 5.

In FIG. 6, the horizontal axis may represent the displacement of the magnetic field with respect to the center of the coil antenna 210.

In FIG. 6, the vertical axis may represent the strength of the magnetic field.

In FIG. 6, graph 601 illustrates a measurement of the magnetic field of the first magnet assembly 310 or 1610 according to a comparative example. The comparison example may be a magnet in which the width of the inner portion 410 is equal to the width of the outer portion 420.

In FIG. 6, graph 602 illustrates the measured magnetic field of the first magnet assembly 310 or 1610 according to the embodiment in FIG. 5. In the first magnet assembly 310 or 1610, the width of the inner portion 410 may be greater than the width of the outer portion 420.

When comparing the graph 601 with the graph 602, it may be observed that the magnetic field of the first magnet assembly 310 or 1610 according to the embodiment of FIG. 5 has decreased at a point spaced a designated distance from the center (e.g., a point where the value of the horizontal axis is 0) of a coil (e.g., a point where the value of the horizontal axis is approximately 15 mm or approximately -15 mm). The point (e.g., the point where the horizontal axis value is approximately 15 mm or approximately -15 mm) is a partial area of a magnet adjacent to the coil antenna 210. The reduction in the magnetic field at the point indicates that the interference of the magnetic field of the first magnetic assembly 310 or 1610 with the coil antenna 210 has been reduced.

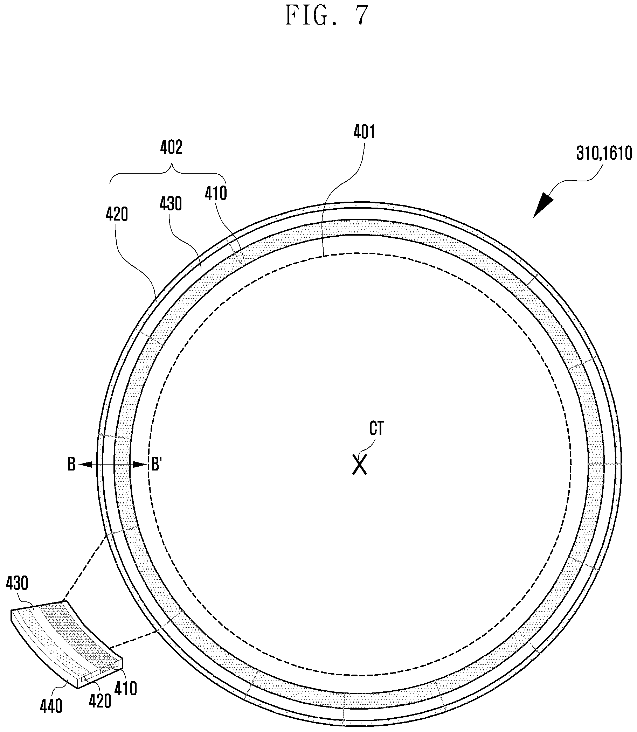

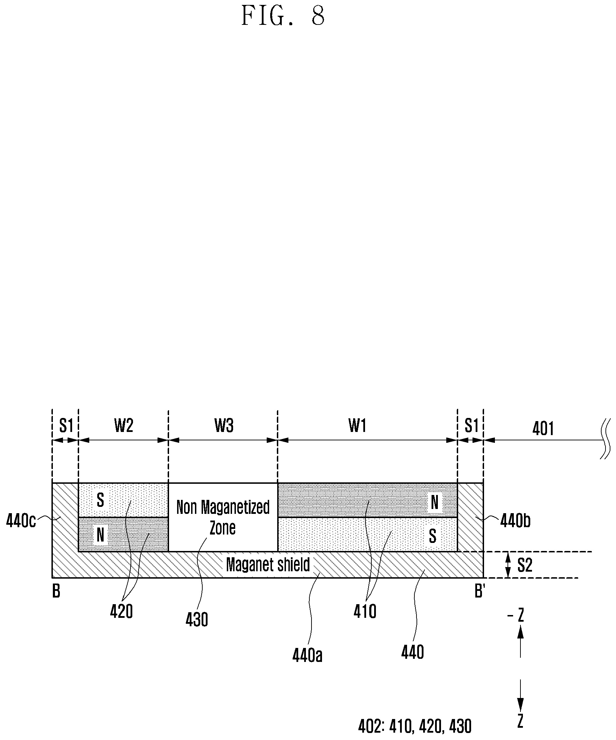

FIG. 7 illustrates a first magnetic assembly 310 or 1610 and a shielding member 440 according to an embodiment. FIG. 8 is a cross-sectional view of a portion of the magnet and the shielding member 440 illustrated in FIG. 7. For example, FIG. 8 may be a drawing showing portions of the first magnetic assembly 310 or 1610 taken along line B-B' illustrated in FIG. 7.

The embodiments of FIGS. 7 and 8 may be at least partially similar to the embodiments of FIG. 5. Hereinafter, the embodiments of FIGS. 7 and 8 that differ from the embodiments of FIG. 5 will be described. The features of components not described in FIGS. 7 and 8 will be replaced with the description of the embodiments of FIG. 5.

In the embodiments of FIGS. 7 and 8, unlike the embodiment of FIG. 5, the shielding member 440 is disposed to surround three surfaces of the first magnet assembly 310 or 1610. For example, in the first magnetic assembly 310 or 1610, shielding the remaining three surfaces, excluding the surface facing the second magnetic assembly 320, by using the shielding member 440 may enhance the shielding effect. For example, as illustrated in FIGS. 7 and 8, when the three surfaces of the first magnet assembly 310 or 1610 are shielded, the magnetic force between the second magnet assembly 320 and the first magnet assembly 310 or 1610 may be maintained at an appropriate level, while reducing performance degradation of components (e.g., the coil antenna 210, the camera module 180) of the electronic device 101 caused by the magnetic field of the first magnetic assembly 310 or 1610.

Referring to FIGS. 7 and 8, the shielding member 440 is disposed around the first magnet assembly 310 or 1610 to surround at least a portion of the first magnet assembly 310 or 1610.

According to an embodiment, the shielding member 440 may be disposed to surround the first magnet 402 in a shape similar to the capital letter "U" of the English alphabet when viewed in cross-section.

According to an embodiment, the shielding member 440 may include a bottom portion 440a disposed beneath (e.g., in the Z direction) the first magnet 402, a first side portion 440b extending perpendicularly from one side of the bottom portion 440a and facing at least a portion of the side surface of the inner portion 410, and a second side portion 440c extending perpendicularly from an opposite side of the bottom portion 440a and facing at least a portion of the side surface of the outer portion 420. According to an embodiment, the bottom portion 440a may be disposed between the first magnet 402 and a battery (e.g., the battery 189 in FIG. 1) of the electronic device 101.

For example, the first side portion 440b of the shielding member 440 may cover the side surface of the inner portion 410 of the first magnet 402. For example, the second side portion 440c of the shielding member 440 may cover the side surface of the outer portion 420 of the first magnet 402.

According to an embodiment, the first side portion 440b may reduce interference of the inner portion 410 with the coil area 401 by shielding a portion of the magnetic flux generated from the inner portion 410 of the first magnet 402.

According to an embodiment, the second side portion 440c may reduce interference of the outer portion 420 with a designated component (e.g., the camera module 180) of the electronic device 101 by shielding a portion of the magnetic flux generated from the outer portion 420 of the first magnet 402.

According to an embodiment, the thickness and width of the shielding member 440 may be uniform. For example, the width (S1) of the first side portion 440b, the width (S1) of the second side portion 440c, and the thickness (S2) of the bottom portion 440a may be the same as a first size.

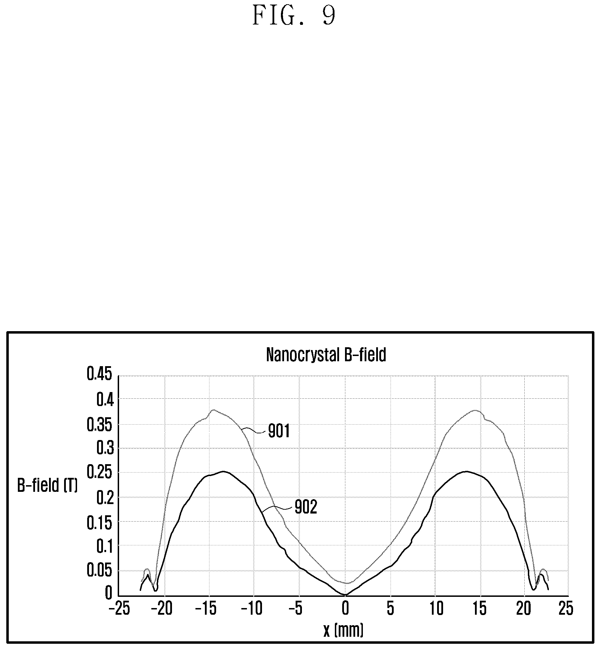

FIG. 9 illustrates the result of an experiment on the magnetic field of the first magnetic assembly 310 or 1610 according to the embodiment of FIG. 8. For example, FIG. 9 may illustrate the result of measuring the magnetic field of the first magnetic assembly 310 or 1610 according to the embodiment of FIG. 8.

In FIG. 9, the horizontal axis may represent the displacement of a magnetic field with respect to the center of the coil antenna 210.

In FIG. 9, the vertical axis may represent the strength of the magnetic field.

In FIG. 9, graph 901 may represent a measurement of the magnetic field of the first magnetic assembly 310 or 1610 according to the embodiment of FIG. 5, and may be the experimental result for an embodiment in which the shielding member 440 is disposed only beneath the first magnetic assembly 310 or 1610.

In FIG. 9, graph 902 illustrates a measurement of the magnetic field of the first magnetic assembly 310 or 1610 according to the embodiment of FIG. 8. The first magnetic assembly 310 or 1610 may be disposed such that the shielding member 440 is not only disposed beneath the first magnetic assembly 310 or 1610 but also surrounds at least a portion of the side surface thereof.

Comparing graph 901 and graph 902, it may be observed that the magnetic field of the first magnet assembly 310 or 1610 according to the embodiment of FIG. 8 has further decreased at a point spaced a designated distance from the center (e.g., the point where the value of the horizontal axis is 0) of a coil (e.g., a point where the value of the horizontal axis is approximately 15 mm or approximately -15 mm). The point (e.g., the point where the horizontal axis value is approximately 15 mm or approximately -15 mm) is a portion of a magnet adjacent to the coil antenna 210, and the reduction of the magnetic field at that point indicates that the interference of the magnetic field of the first magnet assembly 310 or 1610 with the coil antenna 210 has been reduced.

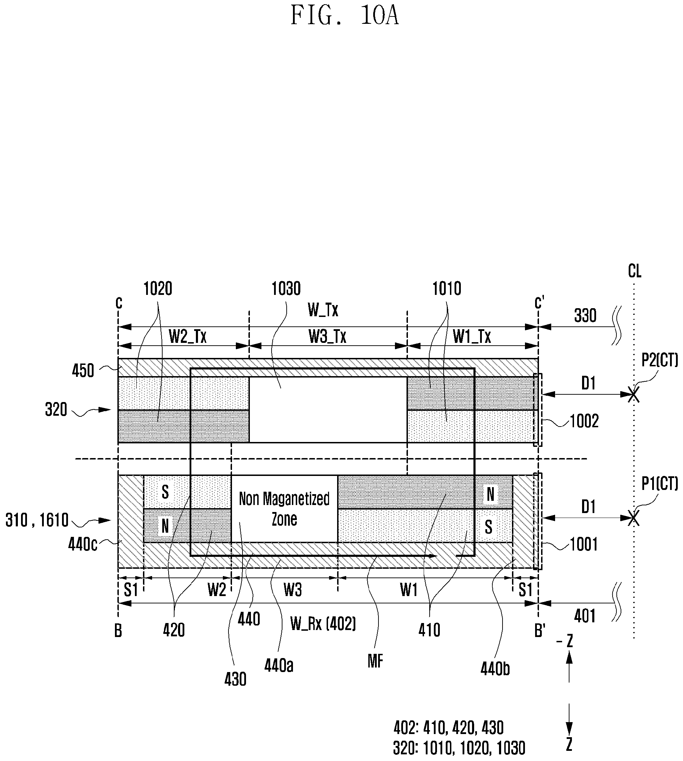

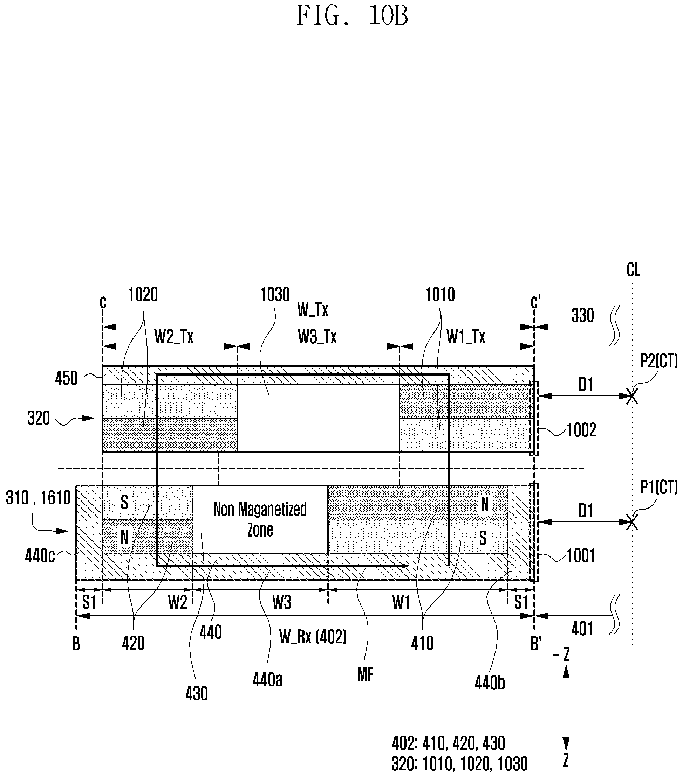

FIGS. 10A and 10B illustrate a state in which the first magnet assembly 310 or 1610 and the second magnet assembly 320 of the power supply device 201, according to an embodiment, are aligned with each other.

FIGS. 10A and 10B may illustrate the cross-section of the second magnetic assembly 320 and the cross-section of the first magnetic assembly 310 or 1610 when the electronic device 101 and the power supply device 201 are aligned due to the magnetic force between the second magnetic assembly 320 and the first magnetic assembly 310 or 1610. For example, FIGS. 10A and 10B illustrate a cross-section of a portion of the second magnetic assembly 320 taken along line C-C' illustrated in FIG. 3 and a cross-section of a portion of the first magnetic assembly 310 or 1610 taken along line B-B' illustrated in FIG. 7.

The embodiments of FIGS. 10A and 10B may be at least partially similar to the embodiment of FIG. 8. Hereinafter, the embodiments of FIGS. 10A and 10B that differ from the embodiment of FIG. 8 will be described. The features of components not described in FIGS. 10A and 10B will be replaced with the description of the embodiment of FIG. 8.

Referring to FIGS. 10A and 10B, the shielding member 440 according to an embodiment may include a bottom portion 440a disposed beneath (e.g., in the Z direction) of the first magnet 402, a first side portion 440b extending perpendicularly from one side of the bottom portion 440a and facing (or covering) at least a portion of the side surface of the inner portion 410, and a second side portion 440c extending perpendicularly from an opposite side of the bottom portion 440a and facing (or covering) at least a portion of the side surface of the outer portion 420. For example, the first side portion 440b of the shielding member 440 may cover a portion of the side surface of the inner portion 410 of the first magnet 402. For example, the second side portion 440c of the shielding member 440 may cover a portion of the side surface of the outer portion 420 of the first magnet 402.

According to an embodiment, the second magnet assembly 320 may include an inner portion 1010 configured to overlap at least a portion of the inner portion 410 of the first magnet 402 and having a third width W1_Tx, an outer portion 1020 configured to overlap at least a portion of the outer portion 420 of the first magnet 402 and having a third width W2_Tx (e.g., W2_Tx is equal to W1_Tx), and an air gap 1030 disposed between the inner portion 1010 and the outer portion 1020. According to an embodiment, the third width W1_Tx may be smaller than a first width W1. According to an embodiment, the second width W2_Tx may be greater than or equal to a second width W2. The width W3_Tx of the air gap 1030 of the second magnet assembly 320 may be different from a width W3 of the air gap 430 of the first magnet 402.

According to an embodiment, when the electronic device 101 and the power supply device 201 are aligned by the magnetic force between the second magnet assembly 320 and the first magnet assembly 310 or 1610, the air gap 1030 may be disposed to overlaps at least a portion of the air gap 430 and a portion of the inner portion 410 of the first magnet 402.

According to an embodiment, when the electronic device 101 and the power supply device 201 are aligned by the magnetic force between the second magnet assembly 320 and the first magnet assembly 310 or 1610, an outer surface 1001 of the first side portion 440b and an outer surface 1002 of the inner portion 1010 may be arranged in a straight line. For example, when the electronic device 101 and the power supply device 201 are aligned by the magnetic force between the second magnetic assembly 320 and the first magnetic assembly 310 or 1610, the inner portion 1010 of the second magnetic assembly 320 may not overlap with the coil area 401. When the electronic device 101 and the power supply device 201 are aligned by the magnetic force between the second magnetic assembly 320 and the first magnetic assembly 310 or 1610, the inner portion 1010 of the second magnetic assembly 320 may overlap a portion of the inner portion 410 of the first magnetic assembly 310 or 1610 and the first side portion 440b covering a portion of the first magnetic assembly 310 or 1610, but may not overlap the coil area 401 (or the coil antenna 210).

According to an embodiment, the first side portion 440b of the shielding member 440 overlaps the inner portion 1010 of the second magnet assembly 320, thereby enabling the first side portion 440b of the shielding member 440 to shield the magnetic field generated by the second magnet assembly 320.

According to an embodiment, when the first magnetic assembly 310 or 1610 is attached to the second magnetic assembly 320, the first magnetic assembly 310 or 1610 and the second magnetic assembly 320 may be concentric with respect to each other. According to an embodiment, the distance between the first side portion 440b of the shielding member 440 and the center CT of the first magnetic assembly 310 or 1610 may correspond to the distance between the center CT of the second magnet assembly 320 and the inner portion 1010 of the second magnet assembly 320. For example, in FIG. 10A, CL may be an imaginary line CL that vertically passes through the center (e.g., CT in FIG. 7) of the first magnet assembly 310 or 1610 or the second magnet assembly 320, which is a concentric circle. In FIG. 10A, P1 and P2 may be some points on the imaginary line CL that vertically passes through the center (e.g., CT in FIG. 7) of the first magnetic assembly 310 or 1610 or the second magnetic assembly 320, which is a concentric circle. For example, the distance from the imaginary line, which passes through the center (e.g., CT in FIG. 7) of the first magnetic assembly 310 or 1610 or the second magnetic assembly 320, to the first side portion 440b of the shielding member 440 may be equal to the distance from the imaginary line CL to the inner portion 1010 of the second magnetic assembly 320.

According to an embodiment, in order to maintain an appropriate magnetic force between the second magnetic assembly 320 and the first magnetic assembly 310 or 1610 , it is preferable to design the width of the inner portion 410 of the first magnet assembly 310 or 1610 to correspond to the width of the inner portion 1010 of the second magnet assembly 320. When, as in the embodiments of FIGS. 10A and 10B, the shielding member 440 is disposed around the first magnet assembly 310 or 1610, the thickness or width of the shielding member 440 may be additionally considered when designing the width of the inner portion 410. For example, it may be preferable to design the width of the inner portion 410 to be relatively reduced by having the first side portion 440b of the shielding member 440 cover the side surface of the inner portion 410. According to an embodiment, the reduction in the width of the inner portion 410 may be designed to be equal to the width of the first side portion 440b of the shielding member 440. For example, when the first side portion 440b of the shielding member 440 is disposed to face the inner portion 410, the width of the inner portion 410 may be reduced by the width of the first side portion 440b. According to the disclosure, even when the first side portion 440b of the shielding member 440 is disposed to face the inner portion 410, the inner portion 410 of the first magnetic assembly 310 or 1610 may not overlap a portion of the coil antenna 210, thereby reducing magnetic field interference caused by the first magnetic assembly 310 or 1610.

In FIGS. 10A and 10B, when the first magnet assembly 310 or 1610 is coupled to the second magnet assembly 320, the magnetic flux (MF) may be formed in the order of the inner portion 410 of the first magnet 402, the inner portion 1010 of the second magnet assembly 320, a shielding unit 450 coupled to the second magnet assembly 320, the outer portion 1020 of the second magnet assembly 320, the outer portion 420 of the first magnet 402, and the shielding member 440 coupled to the first magnet 402. According to an embodiment, the first magnet 402 has a width (i.e., the first width W1) of the inner portion 410 larger than the width (i.e., the second width W2) of the outer portion 420, thereby enabling the density of magnetic flux (MF) around the inner portion 410 to be greater than the density of magnetic flux (MF) in the outer portion 420. When the density of magnetic flux (MF) around the inner portion 410 increases, the magnetic field generated around the inner portion 410 remains within a designated distance from the inner portion 410, thereby reducing the magnetic field generated around the inner portion 410 and directed toward the coil antenna 210.

According to an embodiment, as illustrated in FIG. 10A, the total width W_Rx, which is the sum of the width of the shielding member 440 and the width of the first magnet 402, are substantially equal to the total width W_Tx of the second magnet assembly 320 including the inner portion 1010, the air gap 1030, and the outer portion 1020. For example, when the electronic device 101 and the power supply device 201 are aligned by the magnetic force between the second magnet assembly 320 and the first magnet assembly 310 or 1610, the outer surface 1001 of the first side portion 440b and the outer surface 1002 of the inner portion 1010 are arranged in a straight line, and the total width W_Rx of the first magnetic assembly 310 or 1610 including the shielding member 440 may be equal to the total width W_Tx of the second magnetic assembly 320.

According to an embodiment, as illustrated in FIG. 10B, the total width W_Rx, which is the sum of the width of the shielding member 440 and the first magnet 402, may be greater than the total width W_Tx of the second magnet assembly 320 including the inner portion 1010, the air gap 1030, and the outer portion 1020. For example, when the electronic device 101 and the power supply device 201 are aligned by the magnetic force between the second magnet assembly 320 and the first magnet assembly 310 or 1610, the outer surface 1001 of the first side portion 440b and the outer surface 1002 of the inner portion 1010 are arranged in a straight line, but the total width W_Rx of the first magnetic assembly 310 or 1610 including the shielding member 440 may be greater than the total width W_Tx of the second magnetic assembly 320 due to the second side portion 440c covering the outer portion 420. In this case, the outer surface of the outer portion 1020 of the second magnet assembly 320 and the outer surface of the outer portion 420 of the first magnet assembly 310 or 1610 may be arranged in a straight line.

According to an embodiment, the distance between the first side portion 440b of the shielding member 440 and the center CT of the first magnet assembly 310 or 1610 may be approximately 46 mm in accordance with the Qi2 standard. However, the disclosure is not limited thereto.

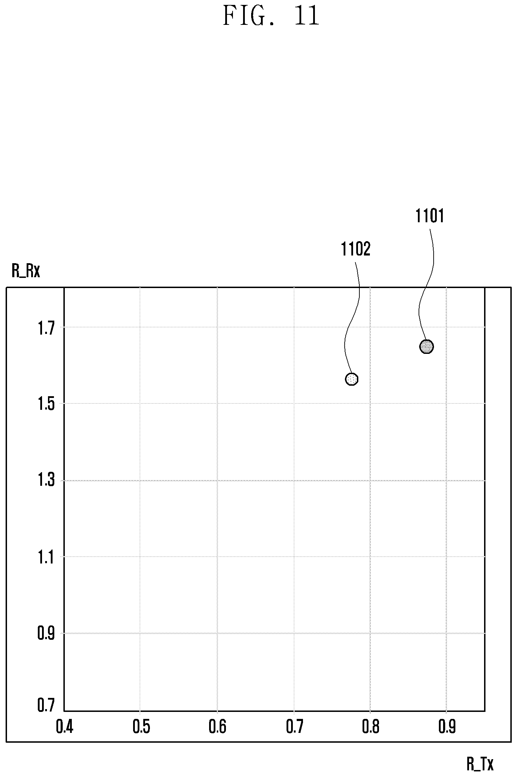

FIG. 11 illustrates the result of an experiment on the AC resistance of a coil while the first magnet assembly 310 or 1610 and the second magnet assembly 320 of the power supply device 201, according to an embodiment, are aligned. For example, FIG. 11 shows the result of an experiment on the resistance of the coil antenna 210 and the coil 330 affected by the magnetic field of the first magnetic assembly 310 or 1610 when the width of the inner portion 410 was reduced according to the embodiments of FIGS. 10A and 10B. For example, as interference or an effect caused by the magnetic field of the first magnet assembly 310 or 1610 increases, the AC resistance of the coil antenna 210 and the AC resistance of the coil 330 may increase, and the charging efficiency may decrease. Therefore, the AC resistance of the coil antenna 210 and the AC resistance of the coil 330 may serve as indicators that can be used to indirectly identify that the interference or an effect from the first magnetic assembly 310 or 1610 has been reduced.

In FIG. 11, the horizontal axis represents the resistance of the coil 330 of the power supply device 201 when the electronic device 101 and the power supply device 201 are aligned by the magnetic force between the second magnetic assembly 320 and the first magnetic assembly 310 or 1610.

In FIG. 11, the vertical axis may represent the resistance of the coil antenna 210 of the electronic device 101 when the electronic device 101 and the power supply device 201 are aligned by the magnetic force between the second magnetic assembly 320 and the first magnetic assembly 310 or 1610.

In FIG. 11, 1101 indicates the AC resistance of the coil antenna 210 and the AC resistance of the coil 330 according to a comparative example in which the width of the inner portion 410 is not reduced when the first side portion 440b of the shielding member 440 is designed to cover the side surface of the inner portion 410. In the comparative example, it may be observed that the AC resistance of the coil antenna 210 is greater than approximately 1.6, and the AC resistance of the coil 330 is greater than approximately 0.8.

In FIG. 11, 1102 indicates the AC resistance of the coil antenna 210 and the AC resistance of the coil 330 according to embodiments of the disclosure, for example, the embodiments of FIGS. 10A and 10B, in which the width of the inner portion 410 is reduced when the first side portion 440b of the shielding member 440 is designed to cover the side surface of the inner portion 410. In the embodiments of FIGS. 10A and 10B, it may be observed that the AC resistance of the coil antenna 210 is less than approximately 1.6, and the AC resistance of the coil 330 is less than approximately 0.8. Therefore, in the embodiments of FIGS. 10A and 10B, it may be observed that the AC resistance of the coil antenna 210 and the AC resistance of the coil 330 have been reduced compared to the comparative example, and interference or an effect caused by the first magnet assembly 310 or 1610 has been reduced.

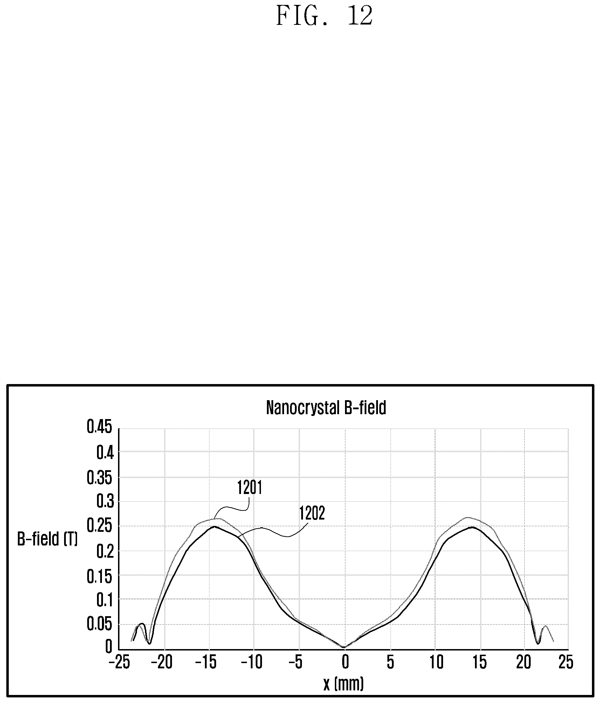

FIG. 12 illustrates the result of an experiment on the magnetic field of the first magnetic assembly 310 or 1610 according to the embodiments of FIGS. 10A and 10B. For example, FIG. 12 may represent the result of measuring the magnetic field of the first magnetic assembly 310 or 1610 according to the embodiments of FIGS. 10A and 10B.

In FIG. 12, the horizontal axis may represent the displacement of the magnetic field with respect to the center of the coil antenna 210.

In FIG. 12, the vertical axis may represent the strength of the magnetic field.

In FIG. 12, graph 1201 shows the measurement of the magnetic field measured of the first magnetic assembly 310 or 1610 according to the embodiment of FIG. 8, and may represent experimental results for the case in which no design is made to reduce the first width W1 of the inner portion 410 when the shielding member 440 surrounds the side surface of the inner portion 410.

In FIG. 12, graph 1202 shows the measurement of the magnetic field of the first magnet assembly 310 or 1610 according to the embodiments of FIGS. 10A and 10B, and may be experimental results for the case in which a design is made to reduce the first width W1 of the inner portion 410 when the shielding member 440 surrounds the side surface of the inner portion 410.

Comparing graph 1201 and graph 1202, it may be observed that the magnetic field of the first magnet assembly 310 or 1610 according to the embodiments of FIGS. 10A and 10B has been further reduced at a point spaced a designated distance from the center (e.g., the point where the value of the horizontal axis is 0) of the coil (e.g., a point where the horizontal axis value is approximately 15 mm or approximately -15 mm). The point (e.g., the point where the horizontal axis value is approximately 15 mm or approximately -15 mm) is a portion of a magnet adjacent to the coil antenna 210, and the reduction in the magnetic field at that point indicates that the interference of the magnetic field of the first magnet assembly 310 or 1610 with the coil antenna 210 has been reduced.

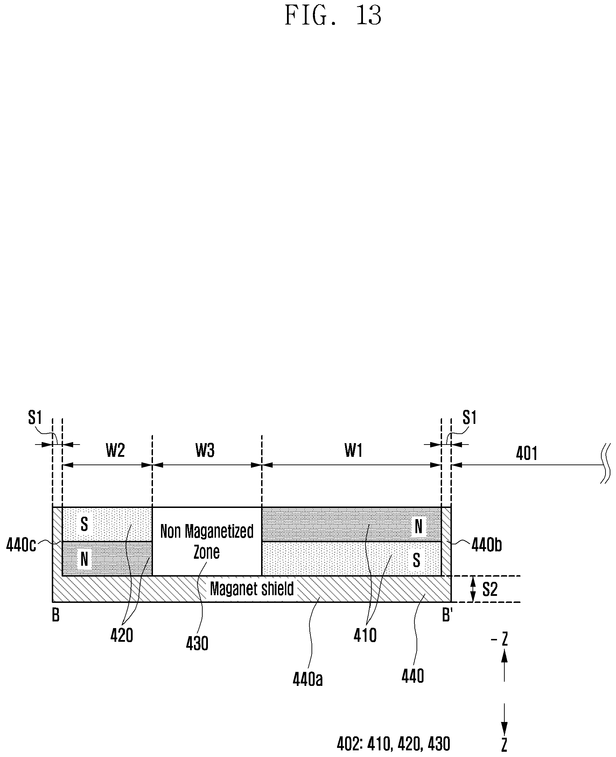

FIG. 13 illustrates a first magnetic assembly 310 or 1610 and a shielding member 440 according to an embodiment.

The embodiment of FIG. 13 may be at least partially similar to the embodiment of FIG. 8. Hereinafter, the embodiment of FIG. 13, which differs from the embodiment of FIG. 8, will be described. The features of components not described in FIG. 13 will be replaced with the description of the embodiment of FIG. 8.

In the embodiment of FIG. 13, unlike the embodiment of FIG. 8, the width of the shielding member 440 may be designed differently for each portion.

Referring to FIG. 13, the shielding member 440 according to an embodiment may include a bottom portion 440a disposed beneath (e.g., in the Z direction) of the first magnet assembly 310 or 1610, a first side portion 440b extending perpendicularly from one side of the bottom portion 440a and facing at least a portion of the side surface of an inner portion 410, and a second side portion 440c extending perpendicularly from an opposite side of the bottom portion 440a and facing at least a portion of the side surface of an outer portion 420. For example, the first side portion 440b of the shielding member 440 may cover the side surface of the inner portion 410 of the first magnet assembly 310 or 1610. For example, the second side portion 440c of the shielding member 440 may cover the side surface of the outer portion 420 of the first magnet assembly 310 or 1610.

According to an embodiment, the bottom portion 440a of the shielding member 440 may have a thickness S2 of a first size. Each of the first side portion 440b and the second side portion 440c of the shielding member 440 may have a width S1 of a second size, which is smaller than the first size.

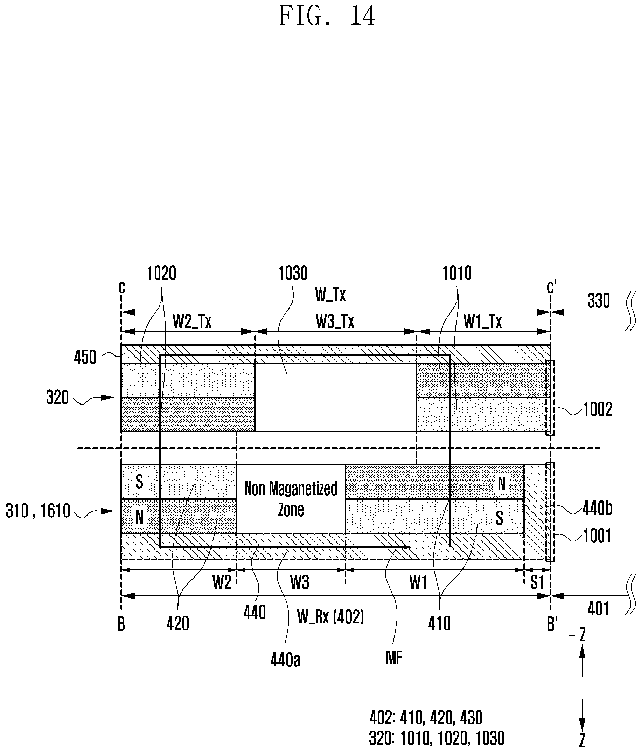

FIG. 14 illustrates a first magnet assembly 310 or 1610 and a shielding member 440 according to an embodiment.

The embodiment of FIG. 14 may be at least partially similar to the embodiments of FIGS. 10A and 10B. Hereinafter, the embodiment of FIG. 14, which differs from the embodiments of FIGS. 10A and 10B, will be described. The features of components not described in FIG. 14 will be replaced with the description of the embodiments of FIGS. 10A and 10B.

In the embodiment of FIG. 14, unlike the embodiments of FIGS. 10A and 10B, the shielding member 440 may not include the second side portion 440c. For example, the shielding member 440 may be disposed to surround the first magnet assembly 310 or 1610 in a shape similar to the capital letter "L" of the English alphabet when viewed in cross-section.

Referring to FIG. 14, the shielding member 440 according to an embodiment may include a bottom portion 440a disposed beneath (e.g., in the Z direction) of the first magnetic assembly 310 or 1610, and a first side portion 440b extending perpendicularly from one side of the bottom portion 440a and facing at least a portion of the side of an inner portion 410.

According to an embodiment, when the electronic device 101 and the power supply device 201 are aligned by the magnetic force between the second magnetic assembly 320 and the first magnetic assembly 310 or 1610, the outer surface 1001 of the first side portion 440b and the outer surface 1002 of the inner portion 1010 may be arranged in a straight line. For example, when the electronic device 101 and the power supply device 201 are aligned by the magnetic force between the second magnetic assembly 320 and the first magnetic assembly 310 or 1610, the inner portion 1010 of the second magnetic assembly 320 may not overlap the coil area 401. When the electronic device 101 and the power supply device 201 are aligned by the magnetic force between the second magnetic assembly 320 and the first magnetic assembly 310 or 1610, the inner portion 1010 of the second magnetic assembly 320 may overlap a portion of the inner portion 410 of the first magnetic assembly 310 or 1610 and the first side portion covering a portion of the first magnetic assembly 310 or 1610, and may not overlap the coil area 401 (or the coil antenna 210).

According to an embodiment, the total width W_Rx (W1 + W2 + W3 + S1), which is the sum of the width S1 of the first side portion 440b of the shielding member 440 and the width of the first magnet 402 is substantially equal to the total width W_Tx (W1_Tx + W2_Tx + W3_Tx) of the second magnet assembly 320 including the inner portion 1010, the air gap 1030, and the outer portion 1020. For example, when the electronic device 101 and the power supply device 201 are aligned by the magnetic force between the second magnet assembly 320 and the first magnet assembly 310 or 1610, the outer surface 1001 of the first side portion 440b and the outer surface 1002 of the inner portion 1010 are arranged in a straight line, and the total width W_Rx, which is the sum of the width of the shielding member 440 and the width of the first magnet 402, may be equal to the total width W_Tx of the second magnet assembly 320.

Although not illustrated, the total width W_Rx of the first magnet assembly 310 or 1610 including the shielding member 440 may be greater than the total width W_Tx of the second magnet assembly 320 including the inner portion 1010, the air gap 1030, and the outer portion 1020. For example, when the electronic device 101 and the power supply device 201 are aligned by the magnetic force between the second magnetic assembly 320 and the first magnetic assembly 310 or 1610, the outer surface 1001 of the first side portion 440b and the outer surface 1002 of the inner portion 1010 are arranged in a straight line, but the outer surface of the outer portion 1020 of the second magnet assembly 320 and the outer surface of the outer portion 420 of the first magnet assembly 310 or 1610 may not be arranged in a straight line. For example, the outer portion 420 of the first magnet assembly 310 or 1610 may be designed to protrude further in the outward direction (e.g., the left direction in FIG. 14) of the outer portion 1020 of the second magnet assembly 320.

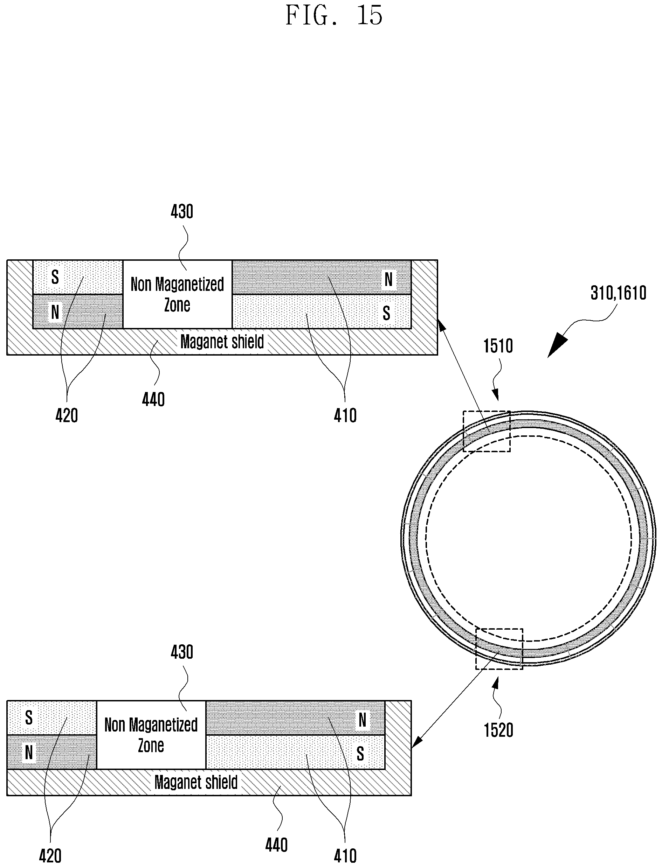

FIG. 15 is a conceptual diagram illustrating area-specific cross-sectional structures of a first magnet assembly 310 or 1610 according to an embodiment.

Referring to FIG. 15, the first magnetic assembly 310 or 1610 according to an embodiment may have different cross-sectional structures in different portions depending on the relative position thereof to components of the electronic device 101. For example, the first magnetic assembly 310 or 1610 may include at least one first portion 1510 having a first type of cross-sectional structure and at least one second portion 1520 having a second type of cross-sectional structure.

According to an embodiment, the first magnet assembly 310 or 1610 may have the first type of cross-sectional structure in the vicinity of components in the electronic device 101 that are likely to experience significant performance degradation due to the effect of the magnetic field of the first magnet assembly 310 or 1610. For example, the first magnetic assembly 310 or 1610 may have the first type of cross-sectional structure in the at least one first portion 1510 adjacent to the camera module 180 of the electronic device 101.

According to an embodiment, the components in the electronic device 101 that are likely to experience significant performance degradation due to the effect of the magnetic field of the first magnet assembly 310 or 1610 may include, for example, the camera module 180 of the electronic device 101, a stylus pen, or an MST antenna, but the disclosure is not limited thereto.

According to an embodiment, the first portion 1510 of the first magnet assembly 310 or 1610 having the first type of cross-sectional structure may include a structure in which the magnetic field is better shielded than the second portion 1520 of the first magnet assembly 310 or 1610 having the second type of cross-sectional structure, thereby reducing the effect or interference of the magnetic field on a designated component of the electronic device.

According to an embodiment, the first portion 1510 of the first magnet assembly 310 or 1610 having the first type of cross-sectional structure may have the cross-sectional structures according to the embodiments of FIGS. 8, 10A, and 10B. For example, three surfaces of the first magnet assembly 310 or 1610 may be covered by the shielding member 440, and the shielding member 440 may be disposed to surround the first magnet assembly 310 or 1610 in a shape similar to the capital letter "U" of the English alphabet.

According to an embodiment, the second portion 1520 of the first magnet assembly 310 or 1610 having the second type of cross-sectional structure may have the cross-sectional structure according to the embodiment of FIG. 14. For example, two surfaces of the second portion 1520 of the first magnet assembly 310 or 1610 may be covered by the shielding member 440, and the shielding member 440 may be disposed to surround the first magnet assembly 310 or 1610 in a shape similar to the capital letter "L" of the English alphabet.

FIG. 16 illustrates the arrangement of a first magnetic assembly 310 or 1610 of an electronic device 101 according to an embodiment.

Referring to FIG. 16, the electronic device 101 according to an embodiment may include a coil antenna 210 and a first magnetic assembly 1610 (e.g., the first magnetic assembly 310 in FIG. 3) disposed to surround the coil antenna 210.

According to an embodiment, the first magnetic assembly 1610 included in the electronic device 101 may have different cross-sectional structures in portions depending on the relative position thereof to components of the electronic device 101, as described with reference to FIG. 15. For example, the first magnetic assembly 1610 may include at least one first portion 1510 having a first type of cross-sectional structure and at least one second portion 1520 having a second type of cross-sectional structure.

According to an embodiment, the first portion 1510 of the first magnet assembly 1610 having the first type of cross-sectional structure may have the cross-sectional structure according to the embodiments of FIGS. 8, 10A, and 10B. For example, three surfaces of the first portion 1510 of the first magnet assembly 1610 may be covered by a shielding member 440, and the shielding member 440 may be disposed to surround the first magnet assembly 1610 in a shape similar to the capital letter "U" of English alphabet.

According to an embodiment, the second portion 1520 of the first magnet assembly 1610 having the second type of cross-sectional structure may have the cross-sectional structure according to the embodiment of FIG. 14. For example, two surfaces of the second portion 1520 of the first magnet assembly 1610 is covered by a shielding member 440, and the shielding member 440 may be disposed to surround the first magnet assembly 1610 in a shape similar to the capital letter "L" of the English alphabet.

According to an embodiment, components in the electronic device 101 that are likely to experience significant performance degradation due to the effect of the magnetic field of the first magnet assembly 1610 may include, for example, the camera module 180 of the electronic device 101, a stylus pen, or an MST antenna. However, the disclosure is not limited thereto.

According to an embodiment, since the magnetic field or B-field generated by a DC magnet is predictable, at least a portion of the shielding member 440 may be formed as an electromagnet.

FIG. 17 illustrates a state in which the power supply device 201 is attached to the electronic device 101 according to an embodiment.

According to an embodiment, as illustrated in FIG. 16, when the first magnet assembly 1610 is embedded in the electronic device 101, the electronic device 101 may perform designated wireless charging, such as MPP charging, in which the coil antenna 210 and the coil 330 are aligned using the magnetic force between the second magnet assembly 320 and the first magnet assembly 1610, even without attaching the cover device 300 (e.g., a cover accessory) that includes a magnet. For example, the power supply device 201 may be directly attached to and aligned with the electronic device 101 by the magnetic force between the second magnetic assembly 320 and the first magnetic assembly 1610.

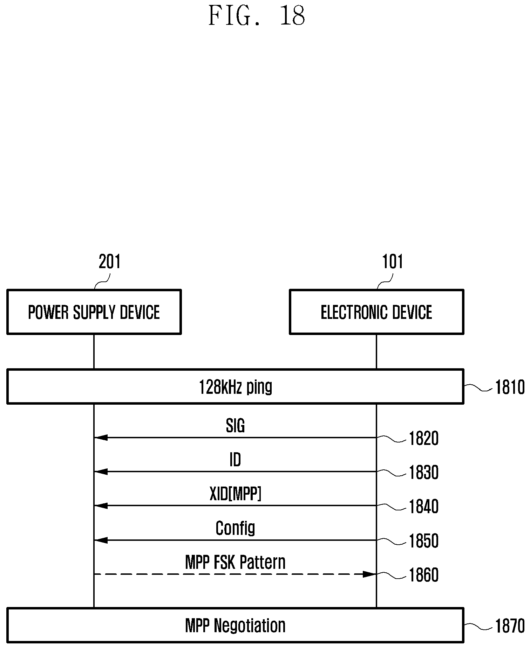

FIG. 18 is a flowchart illustrating the operation of a wireless charging system according to an embodiment.

Referring to FIG. 18, the wireless charging system according to an embodiment may include a power supply device 201 (e.g., the electronic device 102 in FIG. 1) and an electronic device 101 (e.g., the electronic device 101 in FIG. 1). The power supply device 201 and electronic device 101 of the wireless charging system according to an embodiment may support the Qi 2.0 standard or the Qi 2.1 standard, and may support high-speed wireless charging of approximately 15W or more using a magnet, for example, by supporting MPP.

In operation 1810, the power supply device 201 may set the operating frequency to approximately 128 kHz. The power supply device 201 may output a digital ping to wake up the electronic device 101. For example, the power supply device 201 may output a digital ping with a frequency in the approximately 128 kHz band. The digital ping may include a first ping and a second ping. The power supply device 201 may output the first ping and the second ping sequentially. The output power of the first ping may be smaller than the output power of the second ping. The power supply device 201 may adjust the output power by adjusting the duty and voltage of the digital ping.

In operation 1820, the power supply device 201 may receive a signal strength packet (SSP) signal as a response of the electronic device 101 to the digital ping.

In operation 1830, the power supply device 201 may receive an identification (ID) signal including identification information from the electronic device 101. The identification information may include version information, a manufacturing code, or a device identifier.

In operation 1840, the power supply device 201 may receive an extended identification data packet (XID) signal from the electronic device 101 when the electronic device 101 is an MPP-supporting device. According to an embodiment, the power supply device 201 may determine, based on receiving the XID signal, that the electronic device 101 is a device for supporting MPP charging. For example, the electronic device 101 may transmit a response signal to the power supply device 201, wherein the response signal (e.g., the XID signal) is a signal indicating that the electronic device 101 supports designated wireless charging (e.g., MPP) in which the coil 330 of the power supply device 201 is aligned with the coil antenna by using the magnetic field between the second magnetic assembly 320 of the power supply device 201 and the first magnetic assembly 310 or 1610 that overlaps at least partially the second magnetic assembly 320.

In operation 1850, the power supply device 201 may receive a configuration signal containing configuration information related to wireless charging from the electronic device 101. The configuration information may include the wireless charging frequency, the maximum receivable power, or the power that the electronic device 101 requests from the power supply device 201 for battery charging.

In operation 1860, the power supply device 201 may output an MPP pattern signal for MPP charging in response to the XID signal received from the electronic device 101. For example, the power supply device 201 may transmit an MPP pattern signal for MPP charging to the electronic device 101 by using frequency shift keying (FSK), which modulates the frequency of a power signal. For example, the power supply device 201 may transmit an MPP pattern signal for MPP charging to the electronic device 101 by using amplitude shift keying that modulates the amplitude of the power signal.

In operation 1870, the power supply device 201 may perform MPP negotiation with the electronic device 101 for MPP charging. The MPP negotiation between the power supply device 201 and the electronic device 101 may include a negotiation, correction, or renegotiation step.

When the MPP negotiation (i.e., negotiation communication) with the electronic device 101 is completed, the power supply device 201 may wirelessly transmit power of approximately 15W or more.

According to an embodiment of the disclosure, an electronic device (e.g., the electronic device 101 in FIG. 1) may include a coil antenna (e.g., the coil antenna 210 in FIG. 2) for wireless charging, a battery configured to be charged with power received through the coil antenna 210, and a first magnet assembly (e.g., the first magnet assembly 310 or 1610 in FIG. 4) which is disposed adjacent to the coil antenna 210, is detachably attached to a second magnet assembly (e.g., the second magnet assembly 320 in FIG. 3) of a power supply device for the wireless charging, and includes a first magnet (e.g., the first magnet 402 in FIG. 4), wherein the first magnet includes an inner portion (e.g., the inner portion 410 in FIG. 4) having a first width, an outer portion (e.g., the outer portion 420 in FIG. 4) which is disposed farther from the coil antenna 210 than the inner portion 410 and has a second width smaller than the first width, and an air gap (e.g., the air gap 430 in FIG. 4) disposed between the inner portion 410 and the outer portion 420 and disposed farther from the coil antenna 210 than the inner portion 410.

The electronic device 101 may further include a housing that includes a front surface, a rear surface, and a side surface surrounding the space between the front surface and the rear surface, and the first magnet assembly 310 or 1610 may be disposed inside the housing of the electronic device 101.

The electronic device 101 may further include a cover accessory (e.g., the cover device 300 in FIG. 3) detachably coupled to the electronic device 101, and the first magnet assembly 310 or 1610 may be disposed inside the cover accessory.

The first magnetic assembly 310 or 1610 may be disposed to surround the coil antenna 210.

The electronic device 101 may further include a shielding member (e.g., the shielding member 440 in FIG. 8) arranged to at least partially surround the first magnet 402, and the shielding member 440 may include a bottom portion (e.g., the bottom portion 440a in FIG. 8) disposed between the battery of the electronic device 101 and the first magnet 402, and a first side portion (e.g., the first side portion 440b in FIG. 8) extending from one side of the bottom portion 440a and covering a portion of the side surface of the inner portion 410.

When the first magnet assembly 310 or 1610 is attached to the second magnet assembly 320, the first magnet assembly 310 or 1610 and the second magnet assembly 320 may be concentric with respect to each other, and the distance between the first side portion 440b of the shielding member 440 and the center of the first magnetic assembly 310 or 1610 may correspond to the distance between the center of the second magnet assembly 320 and an inner portion 1010 of the second magnet assembly 320.

The distance between the first side portion 440b of the shielding member 440 and the center of the first magnet assembly 310 or 1610 may be 46 mm.

The shielding member 440 may include a second side portion extending from an opposite side of the bottom portion 440a and covering a portion of the side surface of the outer portion 420.

The bottom portion 440a may have a thickness of a first size, and the first side portion 440b and the second side portion may have a width of a second size which is smaller than the first size.

The distance between the outer surface of the second side portion of the shielding member 440 and the center of the first magnet assembly 310 or 1610 may be greater than the distance between the center of the second magnet assembly 320 and the outer surface of an outer portion 1020 of the second magnet assembly 320.

An electronic device 101 according to an embodiment of the disclosure may include a coil antenna 210 for wireless charging, a battery configured to be charged with power received through the coil antenna 210, and a first magnet assembly 310 or 1610 which is disposed adjacent to the coil antenna 210, is detachably attached to a second magnet assembly 320 of a power supply device for the wireless charging, and includes a first magnet 402, the first magnet 402 including an inner portion 410, an outer portion 420 disposed farther from the coil antenna 210 than the inner portion 410, and an air gap 430 disposed between the inner portion 410 and the outer portion 420 and disposed farther from the coil antenna 210 than the inner portion 410, and a shielding member 440 arranged to at least partially surround the first magnet 402, wherein the shielding member 440 includes a bottom portion 440a disposed between the battery of the electronic device 101 and the first magnet 402, and a first side portion 440b extending from one side of the bottom portion 440a and covering a portion of the side surface of the inner portion 410, and when the first magnet assembly 310 or 1610 is attached to the second magnet assembly 320, the first magnet assembly 310 or 1610 and the second magnet assembly 320 are concentric with respect to each other, and the distance between the first side portion 440b of the shielding member 440 and the center of the first magnet assembly 310 or 1610 corresponds to the distance between the center of the second magnet assembly 320 and an inner portion 1010 of the second magnet assembly 320.

The electronic device 101 may further include a housing that includes a front surface, a rear surface, and a side surface surrounding the space between the front surface and the rear surface, and the first magnet assembly 310 or 1610 may be disposed inside the housing of the electronic device 101.

The electronic device 101 may further include a cover accessory detachably coupled to the electronic device 101, and the first magnet assembly 310 or 1610 may be disposed inside the cover accessory.

The inner portion 410 has a first width, and the outer portion 420 may have a second width smaller than the first width.

The first magnetic assembly 310 or 1610 may be disposed to surround the coil antenna 210.

The distance between the first side portion 440b of the shielding member 440 and the center of the first magnet assembly 310 or 1610 may be 46 mm.

The shielding member 440 may include a second side portion extending from an opposite side of the bottom portion 440a and covering a portion of the side surface of the outer portion 420.

The bottom portion 440a may have a thickness of a first size, and the first side portion 440b and the second side portion may have a width of a second size which is smaller than the first size.

The distance between the outer surface of the second side portion of the shielding member 440 and the center of the first magnet assembly 310 or 1610 may be greater than the distance between the center of the second magnet assembly 320 and the outer surface of an outer portion 1020 of the second magnet assembly 320.

The second side surface of the shielding member 440 may be disposed adjacent to a designated component of the electronic device 101 within a designated distance, and the designated component may include a camera module (e.g., the camera module 180 in FIG. 16) of the electronic device 101.

The embodiments of the disclosure may reduce the degradation of the performance of components of an electronic device caused by the magnetic field (e.g., B-field) of a magnet.

## Claims

1. An electronic device comprising:
a coil antenna for wireless charging;
a battery configured to be charged with power received through the coil antenna; and
a first magnet assembly disposed adjacent to the coil antenna, detachably attached to a second magnet assembly of a power supply device for the wireless charging, and comprising a first magnet,
wherein the first magnet comprises:
an inner portion having a first width;
an outer portion disposed farther from the coil antenna than the inner portion and having a second width smaller than the first width; and
an air gap disposed between the inner portion and the outer portion and disposed farther from the coil antenna than the inner portion.

2. The electronic device of claim 1, further comprising a housing including a front surface, a rear surface, and a side surface surrounding a space between the front surface and the rear surface,
wherein the first magnet assembly is disposed inside the housing of the electronic device.

3. The electronic device of claim 1, further comprising a cover accessory detachably coupled to the electronic device,
wherein the first magnet assembly is disposed inside the cover accessory.

4. The electronic device of claim 1, wherein the first magnet assembly is arranged to surround the coil antenna.

5. The electronic device of claim 1, further comprising a shielding member arranged to at least partially surround the first magnet,
wherein the shielding member comprises:
a bottom portion disposed between the first magnet and the battery of the electronic device; and
a first side portion extending from one side of the bottom portion and covering a portion of a side surface of the inner portion.

6. The electronic device of claim 5, wherein, in case that the first magnet assembly is attached to the second magnet assembly, the first magnet assembly and the second magnet assembly are concentric with respect to each other, and
wherein a distance between the first side portion of the shielding member and the center of the first magnet assembly corresponds to a distance between the center of the second magnet assembly and an inner portion of the second magnet assembly.

7. The electronic device of claim 6, wherein the distance between the first side portion of the shielding member and the center of the first magnet assembly is 46mm.

8. The electronic device of claim 6, wherein the shielding member comprises a second side portion extending from the other side of the bottom portion and covering a portion of a side surface of the outer portion.

9. The electronic device of claim 8, wherein the bottom portion has a thickness of a first size, and
wherein the first side portion and the second side portion have a width of a second size smaller than the first size.

10. The electronic device of claim 6, wherein a distance between an outer surface of the second side portion of the shielding member and the center of the first magnet assembly is greater than a distance between the center of the second magnet assembly and an outer surface of an outer portion of the second magnet assembly.

11. An electronic device comprising:
a coil antenna for wireless charging;
a battery configured to be charged with power received through the coil antenna; and
a first magnet assembly disposed adjacent to the coil antenna, detachably attached to a second magnet assembly of a power supply device for the wireless charging, and comprising a first magnet, the first magnet comprising an inner portion, an outer portion disposed farther from the coil antenna than the inner portion, and an air gap disposed between the inner portion and the outer portion and disposed farther from the coil antenna than the inner portion; and
a shielding member arranged to at least partially surround the first magnet,
wherein the shielding member comprises:
a bottom portion disposed between the first magnet and the battery of the electronic device; and
a first side portion extending from one side of the bottom portion and covering a portion of a side surface of the inner portion,
wherein, in case that the first magnet assembly is attached to the second magnet assembly, the first magnet assembly and the second magnet assembly are concentric with respect to each other, and
wherein a distance between the first side portion of the shielding member and the center of the first magnet assembly corresponds to a distance between the center of the second magnet assembly and an inner portion of the second magnet assembly.

12. The electronic device of claim 11, further comprising a housing including a front surface, a rear surface, and a side surface surrounding a space between the front surface and the rear surface,
wherein the first magnet assembly is disposed inside the housing of the electronic device.

13. The electronic device of claim 11, further comprising a cover accessory detachably coupled to the electronic device,
wherein the first magnet assembly is disposed inside the cover accessory.

14. The electronic device of claim 11, wherein the inner portion has a first width, and
wherein the outer portion has a second width smaller than the first width.

15. The electronic device of claim 11, wherein the first magnet assembly is arranged to surround the coil antenna.
